# EUROPEAN PATENT SPECIFICATION

(11) **EP 4 373 113 B1**
(45) Date of publication and mention of the grant of the patent: **18.03.2026**
(21) Application number: 23204670.6
(22) Date of filing: 19.10.2023
(51) Int. Cl.: H04N 23/54, H04N 23/55, H04N 23/57

(54) **METHOD AND ARRANGEMENT FOR ADJUSTING A CAMERA LENS IN RELATION TO A CAMERA SENSOR**
VERFAHREN UND ANORDNUNG ZUM JUSTIEREN EINES KAMERAOBJEKTIVS GEGENÜBER EINEM KAMERASENSOR
PROCÉDÉ ET AGENCEMENT POUR RÉGLER UN OBJECTIF DE CAMÉRA PAR RAPPORT À UN CAPTEUR DE CAMÉRA

(30) Priority: 17.11.2022 SE 2230373
(43) Date of publication of application: 22.05.2024
(73) Proprietor: Topgolf Sweden AB, 182 33 Danderyd (SE)
(72) Inventor: Wase, Lars, 182 56 Danderyd (SE); Grubbström, Carl, 13245 Saltsjö-boo (SE)
(74) Representative: Noréns Patentbyrå AB

(56) References cited:
- CN-B- 107 147 834
- US-A1- 2014 009 607
- US-A1- 2020 225 439

## Description

### BACKGROUND

The present invention relates to an apparatus for adjusting a camera lens in relation to a camera sensor. The present invention further relates to the use of such apparatus for performing such adjustment.

In many applications there is a need to calibrate camera devices with high precision. This is for instance the case for fixedly installed digital cameras used to automatically track flying objects, such as golf balls, baseballs, or other sporting projectiles, as they fly through the air. Such tracking may take place in ways that are well-known in themselves, such as based on recorded consecutive digital images of a space through which such projectiles move in flight, and further based on, for instance, stereoscopic vision techniques using several such cameras and/or recorded image data from a digital camera that is combined with camera sensor data from a doppler radar.

Such calibration typically involves adjustments of both focus and tilt. A focus adjustment, in this context, implies varying a distance between a camera lens and a camera sensor. Correspondingly, a tilt adjustment implies varying an angle between the camera lens and the camera sensor.

More particularly, optimal image quality in a camera sensor requires the camera lens to be aligned with the camera sensor in its focal axis (focusing the camera lens) and perpendicularly to the camera sensor plane (tilt alignment). The camera lens must also be centered with the camera sensor. Placing the center of the camera lens in the center of the image is desirable when using wide angle camera lenses, as sharpness is best in the middle, and since the field of view is affected when putting the camera sensor off-center. When a camera device is shipped, the image quality should not degenerate over time.

There are solutions for performing such calibration, involving several spring-loaded adjustment screws, each adjustment screw acting in relation to a shoulder or support surface so as to adjust a distance, at the adjustment screw in question, between the camera lens and the camera sensor. For instance, in a known solution three such screws are used, one of which defines a fixed pivot adjustment point of the camera lens in relation to the camera sensor; and two of which together define an angular interrelationship between the camera lens and the camera sensor.

Calibration using such known apparatuses is problematic since it is difficult to adjust both a tilt and a focus. Often, the tilt adjustments can be in the order of only 0.01 degrees.

Hence, it would be desirable to be able to more simply calibrate both tilt and focus. In particular, an apparatus for performing such calibration should ideally offer very precise calibration both regarding focus and tilt, should be able to withstand transport without being damaged and, once, calibration is complete, withstand time-related de-calibration during use.

### SUMMARY

The details of one or more embodiments of the invention are set forth in the accompanying drawings and the description below. Other features and advantages of the invention will be apparent from the description and drawings, and from the claims.

In some aspects, the techniques described herein relate to a camera device including a camera lens and a camera sensor, the camera lens being adjustable in relation to the camera sensor, according to the pending claim 1.

In some embodiments, the central axis can pass through a center of the triangle.
US Patent Publication No. 2020/0225439A1 describes an imaging device that includes a substrate on which an image sensor is mounted, a lens barrel holding a lens, a holder holding the lens barrel and connected to the substrate, a first urging member located between the holder and the lens barrel to urge the lens barrel relative to the holder in a direction of an optical axis, at least one second urging member located between the holder and the substrate to urge the substrate relative to the holder in the optical axis direction, and at least one fastener connecting the holder and the substrate together to adjust a distance between the holder and the substrate in the optical axis direction. The lens barrel is movable relative to the holder in a direction perpendicular to the optical axis.
US Patent Publication No. 2014/0009607A1 describes a surveillance device that includes a front cover, at least two guide rods, a lens module, a mounting plate, a first balance spring, a circuit board, and a number of second balance springs. The guide rods are mounted in the front cover. The lens module is received the first through hole. The mounting plate is slidably mounted to the guide rods. The mounting plate defines a through hole. The first balance spring is positioned between the front cover and the mounting plate. The circuit board is mounted to the mounting plate and opposite to the first balance spring. The image sensor is mounted on the circuit board and faces the through hole and the lens module. The second balance springs are positioned between the mounting plate and the circuit board. The first balance spring and the second balance springs keep the image sensor being aligned with the lens module.

The engagement parts are shaped such that the engagement parts rotate spherically in relation to each other about an adjustment point along the central axis.

In some embodiments, the central axis can coincide with a focal axis of the camera lens.

In some embodiments, either the first or the second engagement part can include two or more disjoint pads, each of the two or more disjoint pads including a pad surface shaped to match a common sphere having a sphere diameter, either the second or first engagement part has an engagement surface shaped to match a cylinder having a diameter equal to the sphere diameter, and the pad surfaces of the two or more disjoint pads are in contact with the engagement surface.

In some embodiments, one or more of the two or more disjoint pads can be angularly aligned with a respective one of the three adjustment screw.

In some embodiments, each of one or more of the two or more disjoint pads can be arranged on a respective axially extended arm.

In some embodiments, the axially extended arm or arms can be configured to flex radially so as to exert a pressure against the engagement surface as a result of the two or more disjoint pads engaging with the engagement surface.

In some embodiments, the two or more disjoint pads can be provided as a part of the first engagement part and wherein the engagement surface is provided as a part of the second engagement part.

In some embodiments, the engagement parts can include one respective support surface configured to engage with each of the three respective adjustment screws, wherein the three adjustment screws define the respective minimum axial distance by abutting against the support surface, the support surface being arranged to be pushed axially by the adjustment screw in question as the adjustment screw is turned further into engagement with a threaded part, and wherein at least two of the three adjustment screws can slide radially and/or angularly in relation to the support surface.

In some embodiments, each of the at least two adjustment screws can include a flat surface arranged to abut against the support surface and to slide against the support surface.

In some embodiments, the first engagement part can include a first plate, the second engagement part can include a second plate, and the first and second plates can be associated with a respective general plane of extension being substantially perpendicular to the central axis.

In some embodiments, the first plate and the second plate can both be arranged between the camera lens and the camera sensor.

In some embodiments, each of the three adjustment screws can be arranged radially outside of a radial periphery of a housing of the camera sensor.

In some embodiments, the camera sensor can be mounted in the second plate.

In some aspects, the techniques described herein relate to a method for operating a camera device according to claim 7.

In some embodiments, the adjustment screw can be adjusted by screw motors.

### BRIEF DESCRIPTION OF THE DRAWINGS

In the following, the invention will be described in detail, with reference to exemplifying embodiments of the invention and to the enclosed drawings, wherein:
FIG. 1A shows a perspective view of a camera device 102a, in accordance with some embodiments.
FIG. 1B shows a perspective view of a camera device 102b, in accordance with some embodiments.
FIG. 2 shows a perspective view of an adapter assembly in an assembled state for use in an external configuration, such as the camera device 102a of FIG. 1A in accordance with some embodiments.
FIG. 3 shows a perspective view of a first engagement part and a second engagement part of the adapter assembly of FIG. 2, in accordance with some embodiments.
FIG. 4 shows an exploded view of the adapter assembly of FIG. 2, in accordance with some embodiments.
FIG. 5 shows a vertical cross section of the adapter assembly of FIG. 2, passing through the central axis of the adapter assembly, in accordance with some embodiments.
FIG. 6 shows a vertical cross section of the adapter assembly of FIG. 2, passing through the central axis of the adapter assembly and where no adjustments have been made to the distance between the first engagement part and the second engagement part, in accordance with some embodiments.
FIG. 7 shows a vertical cross section of the adapter assembly of FIG. 2, passing through the central axis of the adapter assembly and where the top adjustment screw has been adjusted to change the distance between the first engagement part and the second engagement part, in accordance with some embodiments.
FIG. 8 shows a perspective view of the housing of the camera device 102b of FIG. 1B, where the front portion of the housing has been separated from the rear portion of the housing to show an internal adapter assembly, in accordance with some embodiments.
FIG. 9 shows a more detailed perspective view of the rear portion of the housing and internal adapter assembly of the camera device 102b of FIG. 1B, in accordance with some embodiments.
FIG. 10 shows a perspective view of the internal adapter assembly of FIG. 8 and FIG. 9, in accordance with some embodiments.
FIG. 11A shows a cross sectional view in a plane parallel to the rear portion of the housing of the camera device 102b, illustrating how the adapter assembly is mounted in the housing, in accordance with some embodiments.
FIG. 11B shows a cross sectional view in a different plane from that shown in FIG. 11A, again parallel to the rear portion of the housing of the camera device 102b, illustrating how the adapter assembly is mounted in the housing, in accordance with some embodiments.

Like reference symbols in the various drawings indicate like elements.

### DETAILED DESCRIPTION

The various embodiments of the invention pertain to techniques for adjusting a camera lens in relation to a camera sensor. The camera device uses an adapter assembly that has a first engagement part connected to the camera lens and a second engagement part connected to the camera sensor, and mechanisms for adjusting the distance between the first and second engagement parts in several adjustment points. This enables precise control of the alignment between the focal plane of the camera lens and the image plane of the camera sensor to ensure that the two planes are aligned, and control of the distance between the camera lens and the camera sensor to ensure that the image captured by the camera lens is optimally focused on the camera sensor.

Various embodiments of the subject matter described in this specification can be implemented to realize one or more of the following advantages. The image can be centered to the focal axis. The pivot point for the tilt adjustment can be centered to the camera sensor, as opposed to conventional techniques (so called "kinematic adjustment") where the rotation occurs around an adjustment point outside the camera sensor, rather than the center of the camera sensor. This is particularly important when using wide angle camera lenses, as the sharpness is best in the center and the field of view is affected when the camera sensor is put off-center compared to the center of the camera lens. As will be described in further detail below, the focus of the camera lens can be adjusted by moving adjustment screws an equal amount, thus moving the camera lens back and forth relative to the camera sensor. Further, as will also be described in further detail below, springs in the adapter assembly provide a counter force to the adjustment points, which keeps the camera lens and camera sensor stable relative to one another.

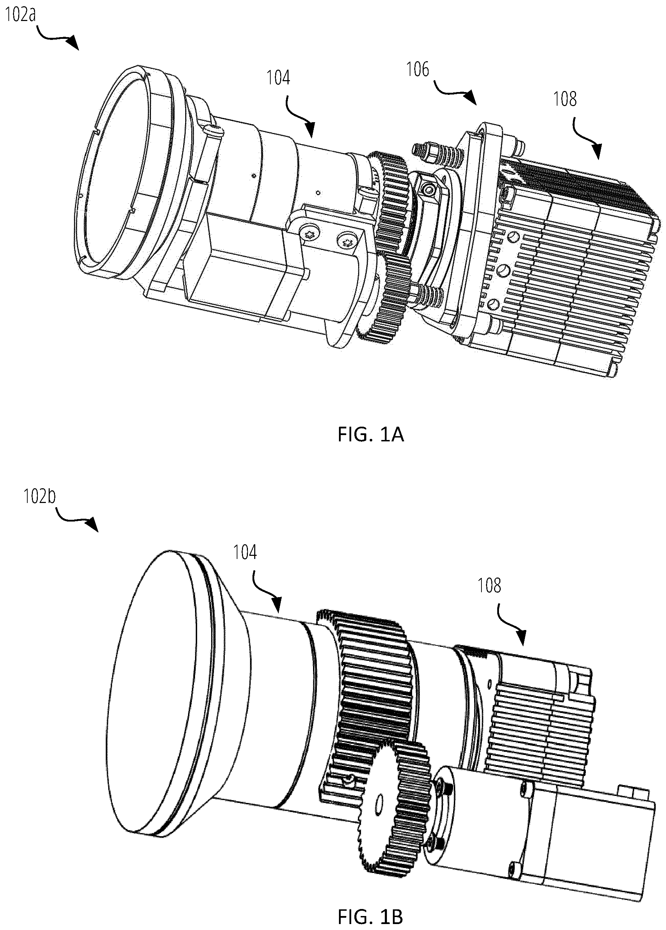

FIG. 1A shows a perspective view of a camera device 102a, in accordance with some embodiments. As can be seen in FIG. 1A, the camera device 102a includes a camera lens 104, an adapter assembly 106, and a camera housing 108. Each of these components will be described in further detail below. In FIG. 1A, the adapter assembly 106 is placed outside the camera housing 108, and will therefore be referred to herein as an external configuration. Typically, the camera device 102a is enclosed in a casing (not shown) to protect the camera device 102a from being subjected to external elements, such as weather or animals/insects (e.g., in the event of an outdoor installation) and/or any impact of balls or other flying projectiles.

FIG. 1B shows a perspective view of a camera device 102b, in accordance with some embodiments. Similar to the camera device 102a of FIG. 1A, the camera device 102b has a camera lens 104 and a camera housing 108. The camera device 102a also includes an adapter assembly 106. However, in contrast to the camera device 102a of FIG. 1A, the adapter assembly 106 in this embodiment is located inside the camera housing 108 and is therefore not visible in FIG. 1B. As will be seen below, though, the basic operating principles of the adapter assembly 106, is very similar in both embodiments. Just like the camera device 102a, the camera device 102b is typically enclosed in a casing (also not shown).

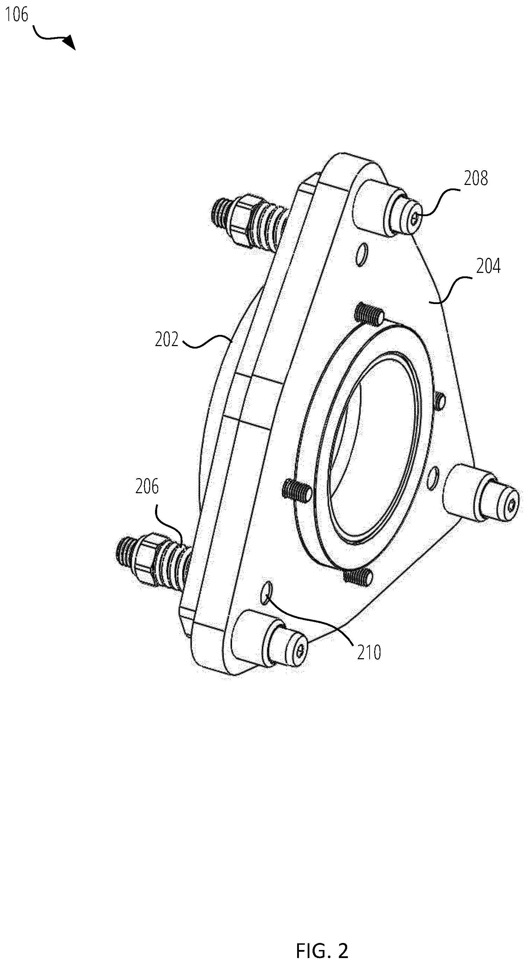

FIG. 2 shows a perspective view of an adapter assembly 106 in an assembled state for used in an external configuration, such as the camera device 102a. As can be seen in FIG. 2, the adapter assembly 106 includes a first engagement part 202, a second engagement part 204, three springs 206, and three adjustment screws 208. The first engagement part 202 and the second engagement part 204, respectively, are each shaped as a plate and having a general plane of extension that is substantially perpendicular to the central axis of the adapter assembly 106. It should be noted that the adapter assembly 106 typically contains further components, but these have been omitted from FIG. 2 to facilitate the explanation of the functioning of the adapter assembly 106. As will be described in further detail below, the adjustment screws 208 are not attached to the first engagement part 202, but are instead configured to push against the first engagement part 202 when they are turned into deeper engagement with corresponding threads on the second engagement part 204, causing the respective portion of the first engagement part 202 to separate from the second engagement part 204. It should be noted that depending on the particular embodiment at hand, the adjustment screws 208 may have inner or outer threads arranged to engage with the corresponding threads on the second engagement part 204. A counter force is provided by the springs 206 which are slid on to bolts that are attached to the second engagement part 204 in holes 210. The springs push the first engagement part 202 against the second engagement part 204 to keep the first engagement part 202 and the second engagement part 204 in a stable position with respect to one another.

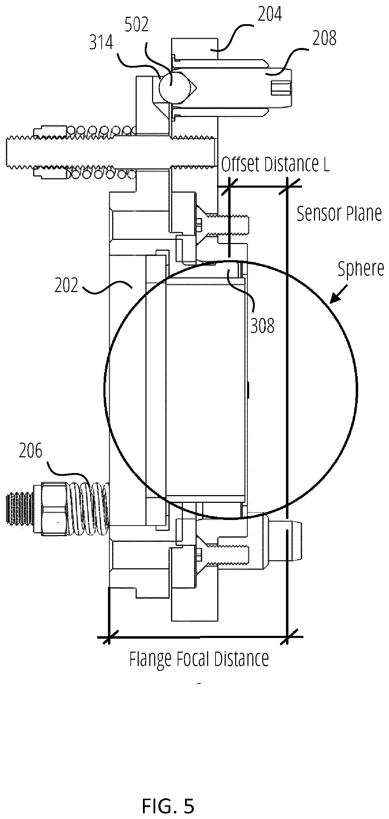

Since the camera lens 104 is attached to the first engagement part 202 and the camera sensor is attached to the second engagement part 204, this mechanism allows both tilting (i.e., adjustment of the orientation of the focal plane of the camera lens 104 with respect to the camera sensor, by adjusting one of the adjustment screws 208) and focusing (i.e., adjustment of the distance between the camera lens 104 and the camera sensor, by adjusting all three adjustment screws 208 an equal amount). As will be described in further detail with respect to FIG. 5, the pivot point around which the camera lens 104 rotates is placed so that the optical axis of the camera lens 104 is in the center of the camera sensor once calibrated.

Furthermore, the first engagement part 202 and the second engagement part 204 have an essentially triangular shape in the embodiment of the adapter assembly 106 illustrated in FIG. 2. This triangular shape allows placement of the adjustment screws 208 such that easy access is provided from the rear of the camera device 102a, as the adjustment screws 208 are not obstructed by the camera housing 108. This can also be seen, for example, in FIG. 1A. This facilitates the adjustment operation when the camera device 102a is being calibrated for use, as well as any subsequent adjustments that may be needed. That is, the camera device 102a can be adjusted in three positions, approximately 120 degrees apart on the same radius from the pivot point. It should be noted, though, that the first engagement part 202 and the second engagement part 204, respectively, do not need to have a triangular shape. As long as the adjustment screws 208 are placed as described above and the physical dimensions of the adapter assembly 106 are such that the adapter assembly 106 fits in the casing, the shape of the perimeter of the first engagement part 202 and/or the second engagement part 204 may be changed as desired.

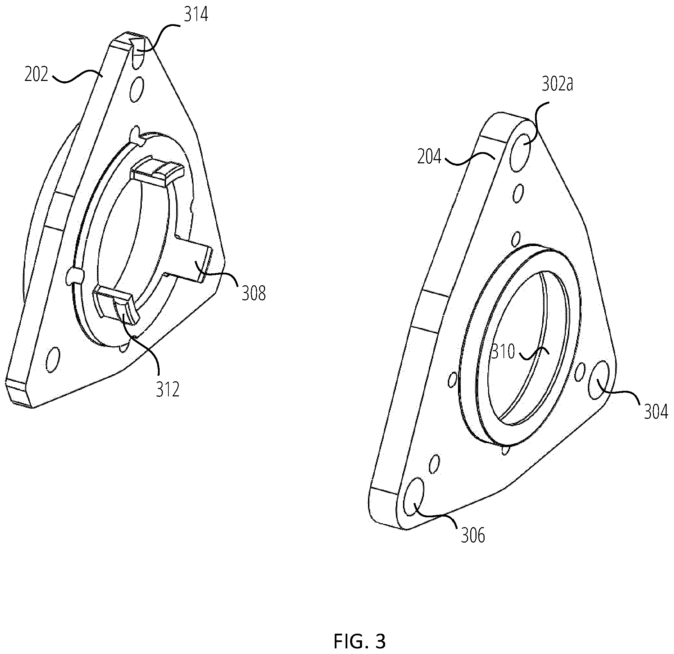

FIG. 3 shows an isolated perspective view of the first engagement part 202 and the second engagement part 204 of the adapter assembly 106 of FIG. 2, in accordance with some embodiments. As can be seen in FIG. 3, the second engagement part 204 has three holes 302a, 304, 306, for the adjustment screws 208. The first engagement part 202 has an indentation 314 corresponding to the hole 302a, but it should be noted that there are no indentations in the first engagement part 202 corresponding to the hole 304 or the hole 306. That is, in all the three adjustment points, the adjustment screws 208 engage with the first engagement part 202 simply by pushing the first engagement part 202 away from the second engagement part 204. The indentation 314 exists to prevent the first engagement part 202 from rotating around the central axis with respect to the second engagement part 204.

In addition to the adjustment screws 208, the first engagement part 202 engages with the second engagement part 204 through three arms 308 on the first engagement part 202, which push against an engagement surface 310 on the second engagement part 204. In the illustrated embodiment, the three arms 308 are angularly aligned with the respective adjustment screws 208 and have a slight give, to ensure a snug interference fit when the first engagement part 202 and the second engagement part 204 are pushed together. However, it should be realized that the angular alignment is not a requirement, and that one or more of the arms 308 may be offset from the placement of the adjustment screws 208. It should also be realized that in some embodiments, only a subset of the arms 308 may have a give, and that there may be embodiment in which different arms 308 have different give.

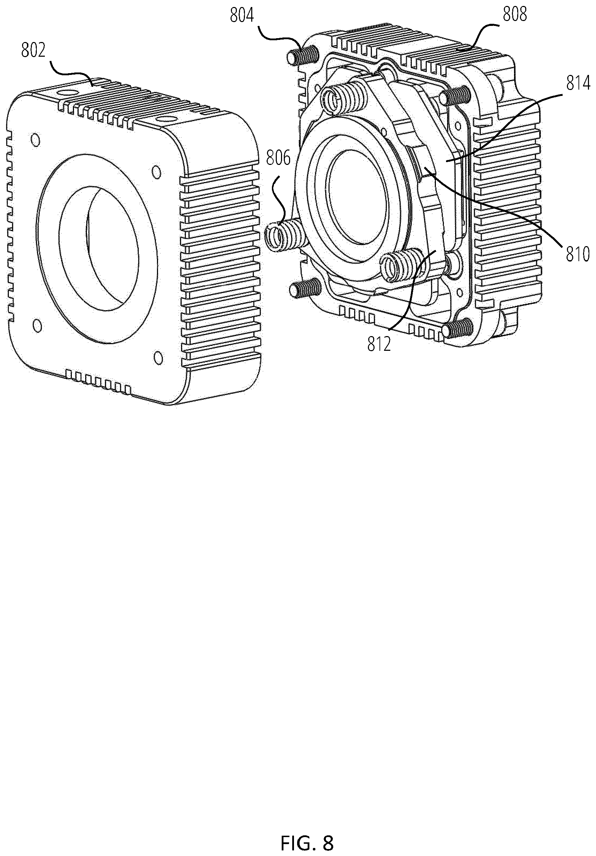

Each of the three arms 308 is provided with a pad 312 that has a spherical surface, corresponding to a sphere that is centered as closely as possible to the center of the camera lens 104. The arms 308 in the illustrated embodiment are made from metal, such as aluminum, stainless steel, brass, etc. In some embodiments, materials such as ceramics or various kinds of plastics can also be used. In some embodiments, the arms 308 can be made of low-friction materials. In some embodiments, the arms 308 can be surface-treated to reduce friction. Since the adapter assembly 106 in the illustrated embodiment is an external adapter assembly 106, that typically is used as an add-on to an existing camera device 102a, there cannot be an exact match between the center of the sphere and the center of the camera sensor, but a very close match can be achieved, and even more precise alignment can be accomplished in the internal embodiment, such as for the camera device 102b, which will be described in further detail with respect to FIG. 8 - FIG. 11B.

The engagement surface 310 has a cylindrical shape, having a central axis parallel (or coinciding) with a focal axis of the camera sensor. As a result of the shapes of the pads 312 and the engagement surface 310, when the adjustment screws 208 push on the first engagement part 202 at their respective adjustment points, the first engagement part 202 rotates with respect to the second engagement part 204 in a spherical fashion, with the center of rotation being on the focal axis of the camera sensor and essentially coinciding with (or at least being sufficiently close to) the sensing surface center of the camera sensor, thus maintaining proper alignment between the center of the camera lens 104 and the center of the camera sensor.

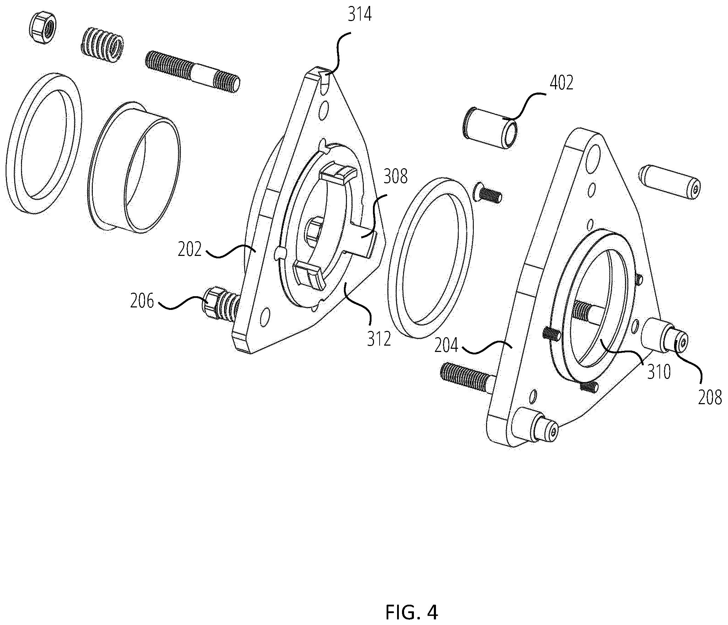

FIG. 4 shows an exploded view of the adapter assembly 106, which illustrates how the different parts of the adapter assembly 106 fit together. As can be seen in the embodiment illustrated in FIG. 4, the adjustment screws 208 fit into threaded sleeves 402 that allow the adjustment screws 208 to push up against the adjustment points of the first engagement part 202. However, it should be noted that this is merely one embodiment, and that there may be several other possibilities (e.g., internal threads, threads made directly in the second engagement part 204, etc.) for allowing the adjustment screws 208 to engage with the second engagement part 204 in a gripping fashion, while merely pushing onto the first engagement part 202. Many such variants will be apparent to the skilled artisan. In one embodiment, the adjustment screws 208 have rounded tips; however, in other embodiments they can have flat tips. The main point is to avoid creating marks in the first engagement part 202, as the pressure from the adjustment screws 208 can be significant, in particular during transport when the camera device 102a may be subjected to various types of external forces (g-forces, etc.).

The adjustment screws 208 in the illustrated embodiment typically have a pitch that is 0.25 millimeters or even finer. The finer the pitch, the finer tilt adjustment and focus adjustment can be accomplished. The adjustment screws 208 can either be turned manually, or using some kind of screw motor, depending on the particular embodiment at hand. In a typical scenario, the focus is adjusted first by turning all three adjustment screws 208, and then turning one or more of them to adjust the tilt of the camera lens 104 with respect to the camera sensor. However, these operations can also be made in the reverse order. Furthermore, these operations are typically done at the factory prior to the camera device 102a being shipped to a user, but there may also be embodiments in which all the adjustments are made after installation at the user site, or where the main adjustments are made at the factory and then subsequent fine tuning are made at the user site. Furthermore, in some embodiments, the calibration may be done in an iterative manner, i.e., making some adjustments, then measuring the image quality, then making further adjustments if needed, then measuring again, etc. In some embodiments, these adjustments may be made manually, whereas in others, dedicated software can be used to observe an image quality and automatically make adjustments (e.g., using a motor that can move the adjustment screws 208 until optimal image quality is achieved), either at regular time intervals, or on an as needed basis, according to certain predefined criteria. In some embodiments, these adjustments can be performed using one or more collimators at predetermined locations with respect to the image sensor and adjusting the focus and tilt until a sharp image is obtained. The key here is to perform measurements against a known "master" and adjust tilt and focus until an expected image is obtained, and the collimators is merely one example of such a "master." Many others are available to those having ordinary skill in the art.

The springs 206 provide a counterforce to the adjustment screws 208 to keep the first engagement part 202 stable with respect to the second engagement part 204. It should be noted that while three springs 206 are shown in this embodiment, there may be other embodiments in which fewer or additional springs are present. Their placement on the first engagement part 202 may also vary. Further, the springs 206 do not need to be conventional cylindrical compression springs such as those shown in the figures. Instead, they may be tension springs, rubber springs, plate springs, pneumatics, or essentially any type of means that provide a counterforce to the adjustment screws 208. Depending on the orientation of the camera device when it is installed, even gravity could be used as a counterforce to the adjustment screws 208.

FIG. 5 shows a vertical cross section of the adapter assembly 106 of FIG. 2, passing through the central axis of the adapter assembly 106, in accordance with some embodiments, just to further explain the functioning of the adapter assembly 106. The camera lens 104 (not shown) is attached to the first engagement part 202, as previously described. The camera lens 104 has a flange focal distance (FFD), which is the distance from where the camera lens 104 is mounted onto the first engagement part 202 to the camera sensor plane, in order to obtain a sharp image at the camera sensor. Ideally the pivot point for the camera lens 104 should coincide with the center of the camera sensor. However, due to the physical constraints of the camera device 102a, this is not possible to accomplish, since the adapter assembly 106 is an add-on device in this external configuration. Thus, the pivot point for the camera lens 104 is offset from the camera sensor by a distance L. The arms 308 serve to bring the pivot point closer to the camera sensor, thus reducing the offset distance L. It is therefore desirable for the arms 308 to be as long as possible to minimize the offset distance L. Furthermore, FIG. 5 shows how the pads on the arms 308 have a shape that conforms to that of an imaginary sphere having its center at an equal distance from each of the arms 308.

FIG. 5 also shows and alternate embodiment in which the front of the adjustment screw 208 has a hollowed-out area, and pushes on a ball 502, which in turn pushes into the indentation 314. This configuration may be somewhat beneficial in that it allows for the force from the ball 502 and adjustment screw 208 to always be perpendicular to the first engagement part 202 as the first engagement part 202 is pushed apart from the second engagement part 204, which may reduce the risk of excessive force from the adjustment screw 208 and associated damage to the first engagement part 202.

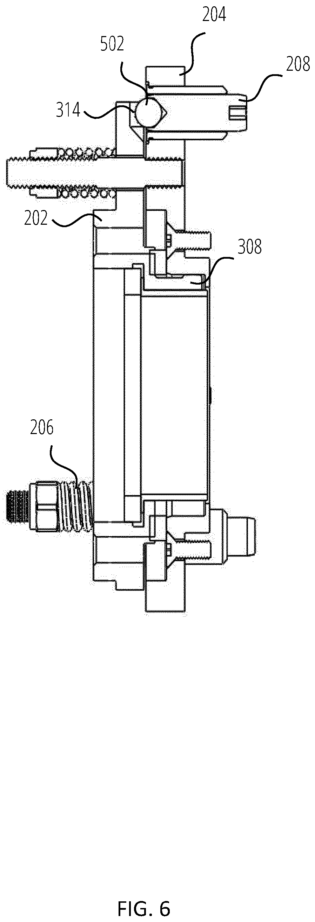

FIG. 6 shows a vertical cross section of the adapter assembly 106 of FIG. 2, passing through the central axis of the adapter assembly 106 and where no adjustments have been made to the distance between the first engagement part 202 and the second engagement part 204.

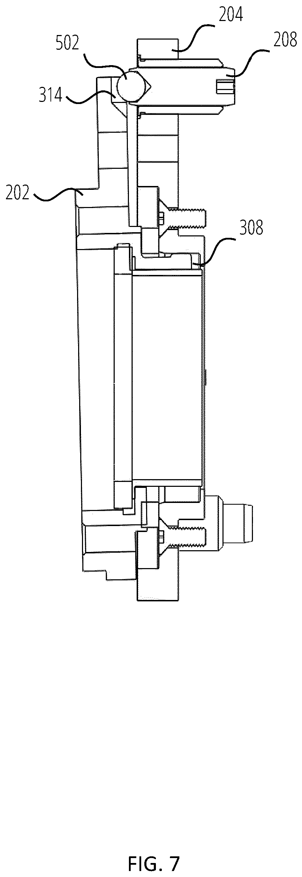

FIG. 7 shows the same general view as FIG. 6, but where the top adjustment screw 208 has been adjusted such that the adjustment screw 208 pushes on the ball 502, which in turn engages with the indentation 314 to push the first engagement part 202 away from the second engagement part 204 by a small amount, to cause the tilt of the camera lens 104 (not shown) that is attached to the first engagement part 202 to be aligned with the camera sensor (not shown) that is attached to the second engagement part 204.

FIG. 8 shows a perspective view of the housing of the camera device 102b of FIG. 1B, where the housing front portion 802 and the housing rear portion 808 have been separated to expose an internal adapter assembly, in accordance with one embodiment. Similar to the adapter assembly described above, the adapter assembly shown in FIG. 8 includes a first engagement part 812, which has a substantially triangular shape, and a second engagement part 814 on which a camera sensor (not visible in FIG. 8) is mounted.

This embodiment also has three adjustment screws, which can be used to push the first engagement part 812 away from the second engagement part 814 to align and focus the camera lens onto the camera sensor. Counter pressure is provided by three springs 806, which are pushed against the first engagement part 812 when the housing front portion 802 is joined with the housing rear portion 808 by the four screws 804 that are located in the respective corners of the housing rear portion 808 and screw into corresponding holes in the housing front portion 802.

Further, in this embodiment the functions of the pads 312 in FIG. 3 are performed by the pads 810, which are formed on the edges of the first engagement part 812. Similar to the pads 312, the pads 810 also have a partly spherical pad surface, which enables the first engagement part 812 to move relative to the second engagement part 814 in a manner that keeps the center of the camera lens 104 aligned as closely as possible with the center of the camera sensor.

A further benefit of the adapter assembly in the internal configuration shown in FIG. 8 is that both the adjustment screws and the screws that hold the springs 806 in place are accessible from the same side of the camera device 102b, and can be reached by removing the housing rear portion 808. This facilitates both assembly of the camera device 102b and adjustment of the camera lens, compared to the adapter assembly 106 in the external configuration shown in FIG. 1A.

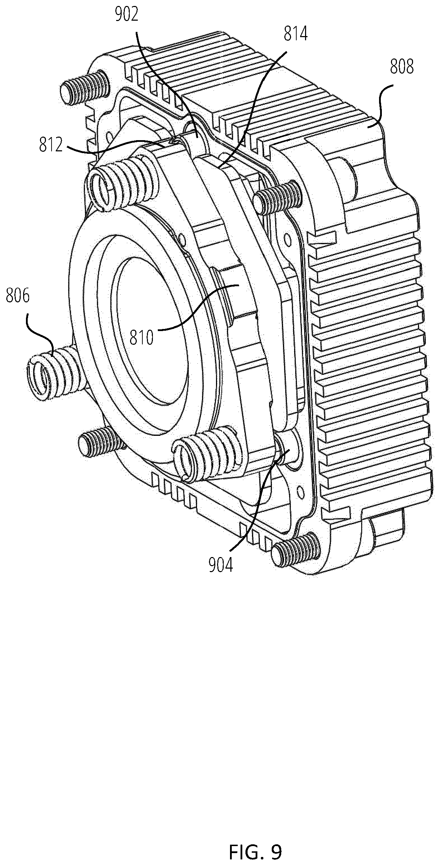

FIG. 9 shows a more detailed perspective view of the rear portion of the housing and internal adapter assembly of the camera device 102b of FIG. 1B, in accordance with one embodiment. The parts and their respective functions are the same as in FIG. 8, but two of the adjustment screws 902 and 904 are more clearly visible. As is clear from FIG. 9, when assembled, this embodiment of the adapter assembly is more compact than the one shown in FIGs. 2-7.

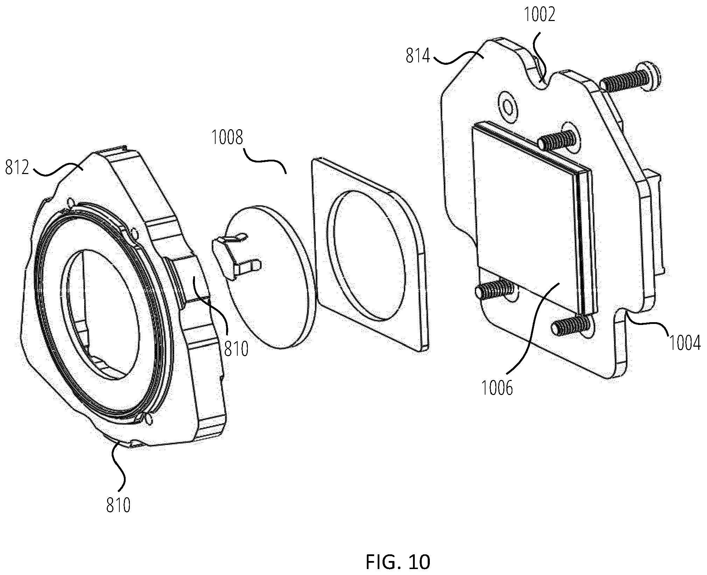

FIG. 10 shows an exploded view of the internal adapter assembly of FIG. 8 and FIG. 9, in accordance with one embodiment. As can be seen in FIG. 10, the second engagement part 814 has a different outline than the second engagement part 204 shown in FIG. 2, and has cutouts 1002 and 1004 for the adjustment screws, such that the adjustment screws are placed approximately 120 degrees apart. A camera sensor 1006 is also shown in FIG. 10, which can be any type of commercially available image sensor that is suitable for use in a camera device 102b, such as active pixel sensors (e.g., CMOS (Complementary metal-oxide-semiconductor) or CCD (Charge-coupled device) sensors). Some embodiments may also be configured to use an IR (Infrared) sensor. FIG. 10 also shows a filter 1008, which sits on top of the camera sensor 1006 to prevent the camera sensor 1006 from getting dirty and remove unwanted light. Typically, the filter 1008 is a piece of quartz glass having a thickness of about 1 mm.

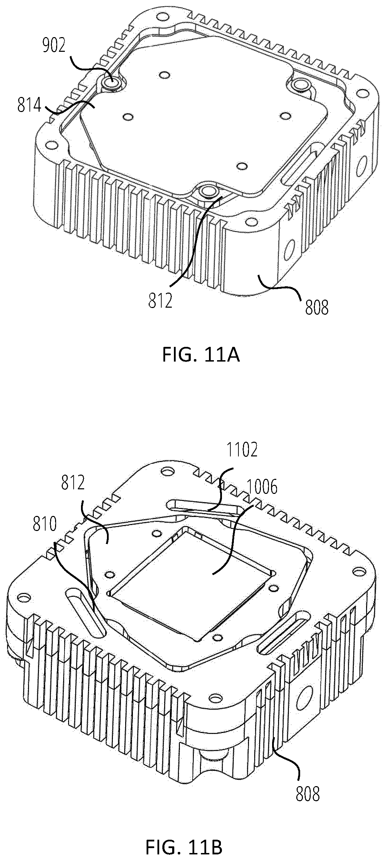

FIG. 11A shows a cross sectional view in a plane parallel to the rear portion of the housing of the camera device 102b, illustrating how the adapter assembly is mounted in the housing, in accordance with some embodiments. As can be seen in FIG. 11A, the cross section has been made in a plane that is just in front of the back cover of the housing rear portion 808, thus exposing the second engagement part 814 and the adjustment screws 902. A portion of the first engagement part 812 can also be seen below the second engagement part 814.

FIG. 11B shows a cross sectional view similar to that of FIG. 11A, but taken at a level in between the first engagement part 812 and the second engagement part 814. This view makes it clearer how the first engagement part 812 sits in the housing rear portion 808. As can be seen in FIG. 11B, the first engagement part 812 only contacts the sides of the housing rear portion 808 in three points, namely the pads 810, and is otherwise free-floating from the housing rear portion 808. The housing rear portion 808 is also provided with three corresponding cutouts 1102, which provide the give when the second engagement part 814 is mounted into the housing rear portion 808, similar to the give that is provided by the arms 308 in the external version of the adapter assembly 106. In essence the thin portion of material between the pads 810 and the respective cutouts 1102 serve as a "suspension bridge" of sorts that allows the first engagement part 812 to float freely from the housing rear portion 808 except where the pads 810 touch these thin portions. For the sake of clarity, it should be noted that while the camera sensor 1006 is shown in this cross-sectional view, it is not mounted in the first engagement part 812, but rather attached to the second engagement part 814, as can be seen, for example, in FIG. 10.

While this specification contains many implementation details, these should not be construed as limitations on the scope of the invention or of what may be claimed, but as descriptions of features specific to implementations of the invention. Certain features that are described in this specification in the context of separate embodiments can also be implemented in combination in a single embodiment. Conversely, various features that are described in the context of a single embodiment can also be implemented in multiple embodiments separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination. Thus, unless explicitly stated otherwise, or unless the knowledge of one of ordinary skill in the art clearly indicates otherwise, any of the features of the embodiment described above can be combined with any of the other features of the embodiment described above.

Thus, embodiments of the invention have been described. Other embodiments are within the scope of the following claims. For example, in some embodiments the first engagement part may be connected to the camera sensor and the second engagement part may be connected to the camera lens. However, camera sensors are typically more sensitive than camera lenses in terms of tilt, and thus while both options are feasible, for these reasons it may be advantageous to have the camera sensor be stationary and serve as the center of rotation.

Thus, many variations to the above examples lie well within the scope of the attached claims and within the capabilities of a person having ordinary skill in the art.

## Claims

1. A camera device (102a, 102b) comprising a camera lens (104) and a camera sensor (1006), the camera lens (104) being adjustable in relation to the camera sensor (1006), the camera device (102a, 102b) being associated with an axial direction, a radial direction and an angular direction, the camera device (102a, 102b) further being associated with a central axis, running through both the camera lens (104) and the camera sensor (1006), the camera device (102a, 102b) comprising:
a spring (806) axially pressing the camera lens (104) towards the camera sensor (1006); and
three adjustment screws (208, 902, 904) defining a respective minimum axial distance between the camera lens (104) and the camera sensor (1006) at three respective adjustment points, the three adjustment points each being radially displaced from the central axis and being angularly distributed around the central axis,
engagement parts (202, 204, 812, 814) that mutually engage with each other, the engagement parts comprising a first engagement part (202, 812) being rigidly connected to the camera lens (104) and a second engagement part (204, 814) being rigidly connected to the camera sensor (1006),
the central axis of the camera device (102a, 102b) is a central axis of an engagement surface (310) of one of the first or second engagement parts (202, 204, 812, 814) and is parallel to or coincides with the focal axis of the camera sensor (1006), and in that
the engagement parts (202, 204, 812, 814) are shaped so as to allow the first engagement part (202, 812) and the second engagement part (204, 814) to slide axially in relation to each other along the central axis of the camera device (102a, 102b) and to rotate spherically in relation to each other, but not to allow any other movement of the first engagement part (202, 812) in relation to the second engagement part (204, 814), wherein
the engagement parts are shaped such that they rotate spherically in relation to each other about a pivot point along the central axis, and wherein
the three adjustment points are arranged to define the points of a triangle in a plane perpendicular to the central axis of the camera device (102a, 102b), the central axis of the camera device passing through the triangle.

2. Camera device (102a, 102b) according to claim 1, wherein
the central axis of the camera device (102a, 102b) passes through a center of the triangle.

3. Camera device (102a, 102b) according to any one of claims 1 or 2, wherein
the central axis of the camera device coincides with a focal axis of the camera lens (104).

4. Camera device (102a, 102b) according to any one of claims 1 to 3, wherein
either the first (202, 812) or the second engagement part (204, 814) comprises two or more disjoint pads (312, 810), each of the two or more disjoint pads (312, 810) comprising a pad surface shaped to match a common sphere having a sphere diameter,
either the second (204, 814) or first engagement part (202, 812) has an engagement surface (310) shaped to match a cylinder having a diameter equal to the sphere diameter, and
the pad surfaces of the two or more disjoint pads (312, 810) are in contact with the engagement surface (310).

5. Camera device (102a, 102b) according to claim 4, wherein
one or more of the two or more disjoint pads (312, 810) is or are angularly aligned with a respective one of the three adjustment screws (208, 902, 904).

6. Camera device (102a, 102b) according to claim 5, wherein
each of one or more of the two or more disjoint pads (810) (312) is or are arranged on a respective axially extended arm, wherein the axially extended arm or arms (308) is or are configured to flex radially so as to exert a pressure against the engagement surface (310) as a result of the two or more disjoint pads (312, 810) (312) engaging with the engagement surface (310).

7. Camera device (102a, 102b) according to any one of claims 4 to 6, wherein
two or more disjoint pads (312, 810) are provided as a part of the first engagement part (202, 812) and wherein
an engagement surface (310) is provided as a part of the second engagement part (204, 814).

8. Camera device (102a, 102b) according to any one of claims 1 to 7, wherein
the engagement parts (202, 204, 812, 814) comprise one respective support surface configured to engage with each of the three respective adjustment screws (208, 902, 904), wherein
the three adjustment screws (208, 902, 904) define the respective minimum axial distance by abutting against the support surface, the support surface being arranged to be pushed axially by the adjustment screw in question as the adjustment screw is turned further into engagement with a threaded part, and wherein
at least two of the three adjustment screws (208, 902, 904) can slide radially and/or angularly in relation to the support surface.

9. Camera device (102a, 102b) according to any one of claims 1 to 8, wherein
the first engagement part (202, 812) comprises a first plate, wherein
the second engagement part (204, 814) comprises a second plate, and wherein
the first and second plates are associated with a respective general plane of extension being substantially perpendicular to the central axis of the camera device (102a, 102b).

10. Camera device (102a, 102b) according to claim 9, wherein
the first plate and the second plate are both arranged between the camera lens (104) and the camera sensor (1006).

11. Camera device (102a, 102b) according to claim 9 or 10, wherein
each of the three adjustment screws (208, 902, 904) is arranged radially outside of a radial periphery of a housing of the camera sensor (1006).

12. Camera device (102a, 102b) according to claim 9, wherein
the camera sensor (1006) is mounted in the second plate.

13. A method for operating a camera device (102a, 102b) according to any preceding claim to adjust the camera lens (104) in relation to the camera sensor (1006),
**characterized in that** the method comprises
adjusting at least one of the adjustment screws (208, 902, 904) so as to achieve a desired angle between the camera lens (104) and the camera sensor (1006), and thereafter
adjusting all of the adjustment screws (208, 902, 904) an axial distance so as to achieve a desired axial distance between the camera lens (104) and the camera sensor (1006).

## Patentansprüche

1. Kameragerät (102a, 102b) umfassend ein Kameraobjektiv (104) und einen Kamerasensor (1006), wobei das Kameraobjektiv (104) in Bezug auf den Kamerasensor (1006) einstellbar ist, wobei die Kameravorrichtung (102a, 102b) in Bezug zu einer axialen Richtung, einer radialen Richtung und einer Winkelrichtung steht, wobei das Kameragerät (102a, 102b) ferner in Bezug zu einer Zentralachse steht, die sowohl durch das Kameraobjektiv (104) als auch durch den Kamerasensor (1006) verläuft, wobei das Kameragerät (102a, 102b) umfasst:
eine Feder (806), die das Kameraobjektiv (104) axial in Richtung des Kamerasensors (1006) drückt; und
drei Einstellschrauben (208, 902, 904), die einen jeweiligen minimalen axialen Abstand zwischen dem Kameraobjektiv (104) und dem Kamerasensor (1006) an drei jeweiligen Einstellpunkten festlegen, wobei die drei Einstellpunkte jeweils radial von der Zentralachse versetzt und in Winkelschritten um die Zentralachse verteilt sind,
wobei Eingriffselemente (202, 204, 812, 814) gegenseitig miteinander eingreifen, wobei die Eingriffselemente ein erstes Eingriffselement (202, 812), das fest mit dem Kameraobjektiv (104) verbunden ist, und ein zweites Eingriffselement (204, 814), das fest mit dem Kamerasensor (1006) verbunden ist, umfassen,
wobei die Zentralachse des Kamerageräts (102a, 102b) eine Zentralachse einer Eingriffsfläche (310) eines der ersten oder zweiten Eingriffselemente (202, 204, 812, 814) ist und parallel zu oder identisch mit der Fokusachse des Kamerasensors (1006) ist, und dass
die Eingriffselemente (202, 204, 812, 814) derart ausgeformt sind, sodass das erste Eingriffselement (202, 812) und das zweite Eingriffselement (204, 814) axial relativ zueinander entlang der Zentralachse der Kameravorrichtung (102a, 102b) gleiten und sich sphärisch relativ zueinander drehen können, wobei jedoch jeede andere Bewegung relativ zwischen dem ersten Eingriffselement (202, 812) dem zweite Eingriffselement (204, 814) gehemmt ist,
wobei die Eingriffselemente derart ausgeformt sind, dass sie sich relativ zueinander um einen Drehpunkt entlang der Zentralachse sphärisch drehen, und
wobei die drei Einstellpunkte derart angeordnet sind, dass sie die Punkte eines Dreiecks in einer Ebene senkrecht zur Zentralachse des Kamerageräts (102a, 102b) ausbilden, wobei die Zentralachse des Kamerageräts durch das Dreieck verläuft.

2. Kameragerät (102a, 102b) gemäß Anspruch 1, wobei
die Zentralachse des Kamerageräts (102a, 102b) durch einen Mittelpunkt des Dreiecks verläuft.

3. Kameragerät (102a, 102b) gemäß einem der Ansprüche 1 oder 2, wobei
die Zentralachse des Kamerageräts mit einer Fokusachse des Kameraobjektivs (104) zusammenfällt.

4. Kameragerät (102a, 102b) gemäß einem der Ansprüche 1 bis 3, wobei entweder das erste (202, 812) oder das zweite Eingriffselement (204, 814) zwei oder mehr separate Auflagen (312, 810) umfasst, wobei jedes der zwei oder mehr separaten Auflagen (312, 810) eine Auflagefläche umfasst, die so ausgeformt ist, dass sie zu einer normalen Kugel mit einem Kugeldurchmesser komplementär ist,
wobei entweder das zweite (204, 814) oder das erste Eingriffselemente (202, 812) eine Eingriffsfläche (310) aufweist, die so ausgeformt ist, dass sie zu einem Zylinder mit einem Durchmesser komplementär ist, der dem Kugeldurchmesser entspricht, und
wobei die Auflagefläche der zwei oder mehr getrennten Auflagen (312, 810) mit der Eingriffsfläche (310) in Kontakt stehen.

5. Kameragerät (102a, 102b) gemäß Anspruch 4, wobei
eine oder mehrere der zwei oder mehr separaten Auflagen (312, 810) mit einer der drei Einstellschrauben (208, 902, 904) in komplementären Winkelschritten ausgerichtet ist bzw. sind.

6. Kameragerät (102a, 102b) gemäß Anspruch 5, wobei
jede der ein oder mehreren der zwei oder mehreren Auflagen separaten Auflagen (810) (312) auf einem jeweiligen axial verlängerten Arm angeordnet ist oder sind, wobei der oder die axial verlängerten Arme (308) so ausgestaltet sind, dass sie sich radial biegen, um einen Druck auf die Eingriffsfläche (310) auszuüben, wenn die zwei oder mehr separate Auflagen (312, 810) (312) mit der Eingriffsfläche (310) eingreifen.

7. Kameragerät (102a, 102b) gemäß einem der Ansprüche 4 bis 6, wobei zwei oder mehr separate Auflagen (312, 810) Teil des ersten Eingriffselements (202, 812) sind und wobei
eine Eingriffsfläche (310) Teil des zweiten Eingriffselements (204, 814) ist.

8. Kameragerät (102a, 102b) gemäß einem der Ansprüche 1 bis 7, wobei die Eingriffselemente (202, 204, 812, 814) jeweils eine Stützfläche umfassen, die so ausgestaltet ist, mit jeder der drei jeweiligen Einstellschrauben (208, 902, 904) in Eingriff zu kommen, wobei die drei Einstellschrauben (208, 902, 904) den jeweiligen minimalen axialen Abstand definieren, indem sie an der Auflagefläche anschlagen, wobei die Auflagefläche so angeordnet ist, dass sie von der betreffenden Einstellschraube axial gedrückt wird, wenn die Einstellschraube weiter in Eingriff mit einem Gewindeteil gedreht wird, und wobei mindestens zwei der drei Einstellschrauben (208, 902, 904) in Bezug auf die Auflagefläche radial und/oder in Winkelschritten verschiebbar sind.

9. Kameragerät (102a, 102b) gemäß einem der Ansprüche 1 bis 8, wobei das erste Eingriffselement (202, 812) eine erste Platte umfasst, wobei das zweite Eingriffselement (204, 814) eine zweite Platte umfasst, und wobei die erste und die zweite Platte mit einer jeweiligen Hauptebene in Bezug stehen, die im Wesentlichen senkrecht zur Zentralachse des Kamerageräts (102a, 102b) ist.

10. Kameragerät (102a, 102b) gemäß Anspruch 9, wobei die erste Platte und die zweite Platte beide zwischen dem Kameraobjektiv (104) und dem Kamerasensor (1006) angeordnet sind.

11. Kameragerät (102a, 102b) gemäß Anspruch 9 oder 10, wobei jede der drei Einstellschrauben (208, 902, 904) radial außerhalb eines radialen Einhüllenden eines Gehäuses des Kamerasensors (1006) angeordnet ist.

12. Kameragerät (102a, 102b) gemäß Anspruch 9, wobei der Kamerasensor (1006) auf der zweiten Platte angeordnet ist.

13. Verfahren zum Betreiben eines Kamerageräts (102a, 102b) gemäß einem der vorstehenden Ansprüche, um das Kameraobjektiv (104) in Bezug auf den Kamerasensor (1006) einzustellen,
**dadurch gekennzeichnet, dass** das Verfahren umfasst
Einstellen mindestens einer der Einstellschrauben (208, 902, 904) umfasst, um einen gewünschten Winkel zwischen dem Kameraobjektiv (104) und dem Kamerasensor (1006) zu erreichen, und danach
Einstellen aller Einstellschrauben (208, 902, 904) um einen gewünschten axialen Abstand zwischen dem Kameraobjektiv (104) und dem Kamerasensor (1006) zu erreichen.

## Revendications

1. Dispositif de caméra (102a, 102b) comprenant un objectif de caméra (104) et un capteur de caméra (1006), l'objectif de caméra (104) étant réglable par rapport au capteur de caméra (1006), le dispositif de caméra (102a, 102b) étant associé à une direction axiale, une direction radiale et une direction angulaire, le dispositif de caméra (102a, 102b) étant en outre associé à un axe central s'étendant à la fois à travers l'objectif de caméra (104) et le capteur de caméra (1006), le dispositif de caméra (102a, 102b) comprenant :
un ressort (806) comprimant axialement l'objectif de caméra (104) vers le capteur de caméra (1006) ; et
trois vis de réglage (208, 902, 904) définissant une distance axiale minimum respective entre l'objectif de caméra (104) et le capteur de caméra (1006) à trois points de réglage respectifs, les trois points de réglage étant chacun radialement déplacés par rapport à l'axe central et étant angulairement répartis autour de l'axe central,
des parties de mise en prise (202, 204, 812, 814) qui se mettent mutuellement en prise entre eux, les parties de mise en prise comprenant une première partie de mise en prise (202, 812) qui est rigidement raccordée à l'objectif de caméra (104) et une seconde partie de mise en prise (204, 814) qui est rigidement raccordée au capteur de caméra (1006),
l'axe central du dispositif de caméra (102a, 102b) est un axe central d'une surface de mise en prise (310) de l'une parmi les première ou seconde parties de mise en prise (202, 204, 812, 814) et est parallèle à ou coïncide avec l'axe focal du capteur de caméra (1006), et en ce que :
les parties de mise en prise (202, 204, 812, 814) sont formées pour permettre à la première partie de mise en prise (202, 812) et à la seconde partie de mise en prise (204, 814) de coulisser axialement l'une par rapport à l'autre le long de l'axe central du dispositif de caméra (102a, 102b) et de tourner de manière sphérique l'une par rapport à l'autre, mais ne pas permettre tout autre mouvement de la première partie de mise en prise (202, 812) par rapport à la seconde partie de mise en prise (204, 814), dans lequel :
les parties de mise en prise sont formées de sorte qu'elles tournent de manière sphérique l'une par rapport à l'autre autour d'un point de réglage le long de l'axe central, et dans lequel :
les trois points de réglage sont agencés pour définir les points d'un triangle dans un plan perpendiculaire à l'axe central du dispositif de caméra (102a, 102b), l'axe central du dispositif de caméra passant par le triangle.

2. Dispositif de caméra (102a, 102b) selon la revendication 1, dans lequel :
l'axe central du dispositif de caméra (102a, 102b) passe par un centre du triangle.

3. Dispositif de caméra (102a, 102b) selon l'une quelconque des revendications 1 ou 2, dans lequel :
l'axe central du dispositif de caméra coïncide avec un axe focal de l'objectif de caméra (104).

4. Dispositif de caméra (102a, 102b) selon l'une quelconque des revendications 1 à 3, dans lequel :
la première (202, 812) ou la seconde partie de mise en prise (204, 814) comprend deux coussinets disjoints (312, 810) ou plus, chacun des deux coussins disjoints (312, 810) ou plus comprenant une surface de coussinet formée pour correspondre à une sphère commune ayant un diamètre de sphère,
la seconde (204, 814) ou la première partie de mise en prise (202, 812) a une surface de mise en prise (310) formée pour correspondre à un cylindre ayant un diamètre égal au diamètre de sphère, et
les surfaces de coussinet des deux coussinets disjoints (312, 810) ou plus sont en contact avec la surface de mise en prise (310).

5. Dispositif de caméra (102a, 102b) selon la revendication 4, dans lequel :
un ou plusieurs des deux coussinets disjoints (312, 810) ou plus est ou sont aligné(s) de manière angulaire avec une vis respective des trois vis de réglage (208, 902, 904).

6. Dispositif de caméra (102a, 102b) selon la revendication 5, dans lequel :
chacun des un ou plusieurs des deux coussinets disjoints (810) (312) ou plus est ou sont agencé(s) sur un bras axialement étendu respectif, dans lequel le bras ou les bras axialement étendu(s) (308) est ou sont configuré(s) pour se fléchir radialement afin d'exercer une pression contre la surface de mise en prise (310) en raison des deux coussinets disjoints (312, 810) (312) ou plus qui se mettent en prise avec la surface de mise en prise (310).

7. Dispositif de caméra (102a, 102b) selon l'une quelconque des revendications 4 à 6, dans lequel :
deux coussinets disjoints (312, 810) ou plus sont prévus en tant que partie de la première partie de mise en prise (202, 812), et dans lequel :
une surface de mise en prise (310) est prévue en tant que partie de la seconde partie de mise en prise (204, 814).

8. Dispositif de caméra (102a, 102b) selon l'une quelconque des revendications 1 à 7, dans lequel :
les parties de mise en prise (202, 204, 812, 814) comprennent une surface de support respective configurée pour se mettre en prise avec chacune des trois vis de réglage (208, 902, 904) respectives, dans lequel :
les trois vis de réglage (208, 902, 904) définissent la distance axiale minimum respective en venant en butée contre la surface de support, la surface de support étant agencée pour être poussée de manière axiale par la vis de réglage en question lorsque la vis de réglage continue à tourner en mise en prise avec une partie filetée, et dans lequel :
au moins deux des trois vis de réglage (208, 902, 904) peuvent coulisser de manière radiale et/ou angulaire par rapport à la surface de support.

9. Dispositif de caméra (102a, 102b) selon l'une quelconque des revendications 1 à 8, dans lequel :
la première partie de mise en prise (202, 812) comprend une première plaque, dans lequel :
la seconde partie de mise en prise (204, 814) comprend une seconde plaque, et dans lequel :
les première et seconde plaques sont associées avec un plan d'extension général respectif qui est sensiblement perpendiculaire à l'axe central du dispositif de caméra (102a, 102b).

10. Dispositif de caméra (102a, 102b) selon la revendication 9, dans lequel :
la première plaque et la seconde plaque sont toutes deux agencées entre l'objectif de caméra (104) et le capteur de caméra (1006).

11. Dispositif de caméra (102a, 102b) selon la revendication 9 ou 10, dans lequel :
chacune des trois vis de réglage (208, 902, 904) est agencée radialement à l'extérieur d'une périphérie radiale d'un boîtier du capteur de caméra (1006).

12. Dispositif de caméra (102a, 102b) selon la revendication 9, dans lequel :
le capteur de caméra (1006) est monté dans la seconde plaque.

13. Procédé pour actionner un dispositif de caméra (102a, 102b) selon l'une quelconque des revendications précédentes afin de régler l'objectif de caméra (104) par rapport au capteur de caméra (1006),
**caractérisé en ce que** le procédé comprend les étapes consistant à :
régler au moins l'une des vis de réglage (208, 902, 904) afin d'obtenir un angle souhaité entre l'objectif de caméra (104) et le capteur de caméra (1006), et ensuite :
régler toutes les vis de réglage (208, 902, 904) sur une distance axiale afin d'obtenir la distance axiale souhaitée entre l'objectif de caméra (104) et le capteur de caméra (1006).
